# EUROPÄISCHE PATENTSCHRIFT

(11) **EP 3 024 709 B1**
(45) Veröffentlichungstag und Bekanntmachung des Hinweises auf die Patenterteilung: **05.10.2022**
(21) Anmeldenummer: 14736843.5
(22) Anmeldetag: 09.07.2014
(51) Int. Cl.: B60W 30/095, G08G 1/16, B60W 40/04

(54) **EFFIZIENTES BEREITSTELLEN VON BELEGUNGSINFORMATIONEN FÜR DAS UMFELD EINES FAHRZEUGS**
EFFICIENTLY PROVIDING OCCUPANCY INFORMATION ON THE SURROUNDINGS OF A VEHICLE
FOURNITURE EFFICACE D'INFORMATIONS D'OCCUPATION POUR L'ENVIRONNEMENT D'UN VÉHICULE

(30) Priorität: 26.07.2013 DE 102013214632
(43) Veröffentlichungstag der Anmeldung: 01.06.2016
(73) Patentinhaber: Bayerische Motoren Werke Aktiengesellschaft, 80809 München (DE)
(72) Erfinder: MANZ, Michael, 85643 Steinhöring (DE); VANHOLME, Benoit, 80801 München (DE)
(86) Internationale Anmeldenummer: PCT/EP2014/064694
(87) Internationale Veröffentlichungsnummer: WO 2015/010901

(56) Entgegenhaltungen:
- EP-A1- 1 672 390
- WO-A1-2011/047730
- DE-A1-102009 007 395
- US-A- 6 163 252
- MANUEL YGUEL ET AL: "Efficient GPU-based Construction of Occupancy Girds Using several Laser Range-finders", INTELLIGENT ROBOTS AND SYSTEMS, 2006 IEEE/RSJ INTERNATIONAL CONFERENCE ON, IEEE, PI, 1. Oktober 2006 (2006-10-01), Seiten 105-110, XP031006221, ISBN: 978-1-4244-0258-8

## Beschreibung

Die Erfindung betrifft ein Verfahren zum effizienten Bereitstellen von Belegungsinformationen für das Umfeldes eines Fahrzeugs und eine entsprechend eingerichtete Rechenvorrichtung. Die Erfindung ist im Bereich der Umfelderkennung angesiedelt.

In Zukunft werden Kraftfahrzeuge über eine Fülle von Fahrerassistenzsystemen verfügen, die den Fahrer vor Kollisionen warnen und gegebenenfalls auch durch Eingriffe versuchen, Kollisionen zu vermeiden. Beispiele solcher Fahrerassistenzsysteme sind ein Notbremsassistent, ein Spur-Halte-Assistent, ein Toter-Winkel-Assistent, ein Einparkassistent und ein sogenannter Automatic Cruise Control Assistent (ACC), insbesondere für Autobahnfahrten. Um diese Funktionen bereit zu stellen, ist für Fahrerassistenzsysteme die Kenntnis des Umfeldes des Fahrzeugs entscheidend. Dazu wird das Umfeld mit einem oder mehreren Sensoren wie Radar, Lidar, Kamera, Ultraschallsensoren oder ähnlichen aus dem Stand der Technik bekannten Sensoren abgetastet bzw. aufgenommen. Mithilfe ebenfalls im Stand der Technik bekannter Signalverarbeitungsverfahren kann dann die Belegung des Umfeldes durch ein Hindernis erkannt werden. Die Belegung zeigt an, dass das Umfeld in diesem Bereich nicht durch das Fahrzeug befahren werden kann.

Bisher ist es bekannt, dass das Umfeld in gleichmäßige, bevorzugt rechteckige, Bereiche aufgeteilt wird und bestimmt wird, welche Bereiche des Umfeldes belegt sind. So entsteht ein Belegungsraster bzw. Belegungs-Grid. Die Druckschrift WO 2013/060323 beschreibt ein solches Belegungsraster. In einem solchen System ist häufig vorgesehen, dass die Größe der Bereiche den jeweils höchsten Anforderung der Fahrerassistenzsysteme entspricht. Durch diese Aufteilung des Umfeldes entstehen sehr große Datenmengen. Gleichzeitig kann eine Verringerung der Größe der Bereiche zur Datenreduktion eine unzureichende Genauigkeit bieten. Dokument US 6, 163,252 offenbart eine Vorrichtung zur Erkennung von Hindernissen, welche dazu eingerichtet ist, Hindernisse korrekt zu erkennen ohne die Kosten zu erhöhen.

Die Aufgabe, die der Erfindung zugrunde liegt, ist es, effizient Belegungsinformationen für das Umfeld eines Fahrzeugs bereit zu stellen.

Die Aufgabe wird durch das Verfahren, das Computerprogramm und die Rechenvorrichtung gemäß den unabhängigen Ansprüchen gelöst. Vorteilhafte Weiterbildungen sind in den abhängigen Ansprüchen definiert.

In einem Aspekt umfasst ein Verfahren nach Anspruch 1 zum Betreiben eines Fahrerassistenzsystems eines Fahrzeugs zur Warnung und/oder Vermeidung von Kollisionen unter Verwendung von dem effizienten Bereitstellen von Belegungsinformationen für das Umfeld eines Fahrzeugs, wobei das Fahrzeug Sensoren zur Ermittlung der Belegung des Umfeldes umfasst. Falls nur eine Belegung in dem jeweiligen Bereich ermittelt wurden kann diese Belegung als die am sichersten ermittelte Belegung und die nächste Belegung ausgegeben werden. Falls in einem Bereich keine Belegung erkannt wird, kann die maximale Entfernung, in der die Sensoren des Fahrzeugs Belegungen erkennen können, als nächste und sicherste Belegung in dem jeweiligen Bereich ausgegeben werden. Die Bereitstellung der am sichersten ermittelten Belegung und der nächsten Belegung kann in einem kartesischen oder polaren Koordinatensystem erfolgen oder in einer Mischung, je nachdem, ob sich die erkannte Belegung in Fahrtrichtung vor oder hinter dem Fahrzeug befindet.

Durch das Verfahren werden also die am sichersten ermittelte Belegung und die nächste Belegung je Bereich bereitgestellt. Auf diese Weise kann das Umfeld eines Fahrzeugs mithilfe weniger Informationen beschrieben werden. Es müssen nicht mehr alle Belegungen des Umfeldes bereitgestellt werden und es wird eine Reduzierung der Daten erreicht. Die Reduzierung ist dabei so gewählt, dass die für Fahrerassistenzsysteme wichtigen Informationen kommuniziert werden. Für viele Assistenzsysteme stellen die nächste und die am sichersten erkannte Belegung die wichtigsten Entscheidungsgrundlagen dar. Beispielsweise kann in einem Fahrerassistenzsystem, das automatisch ein Ausweichmanöver einleitet, schon die ungewisse Anwesenheit einer nächsten Belegung einen Eingriff in dessen Richtung verhindern.

Gleichzeitig werden Eingriffe nur aufgrund von sicher erkannten Belegungen überhaupt erst ausgelöst. Mit anderen Worten: Die Erkennung der nächsten Belegung ist auf die Verhinderung einer Auslösung einer Aktion hin optimiert (Belegungen bzw. Hindernisse dürfen nicht übersehen werden), wohingegen die sichere Erkennung von Belegungen auf die Auslösung einer Aktion hin optimiert ist (Belegungen bzw. Hindernisse müssen mit hoher Wahrscheinlichkeit erkannt werden). Die Bereitstellung von Umgebungsinformationen nimmt so weniger Speicherplatz und Übertragungszeit in Anspruch, bietet aber gleichzeitig die nötigen Informationen. Diese Eigenschaften sind insbesondere für Echtzeitsysteme, wie sie in Fahrzeugen zur Steuerung der Fahrt nötig sind, von Vorteil.

Die Größe der Bereiche kann entsprechend der Leistungsfähigkeit der Hardware gewählt werden. Jeder Bereich kann als Segment aufgefasst werden. Bei dem Ermitteln der Belegung kann für die jeweilige Anwesenheit eine Wahrscheinlichkeit festgestellt werden (Belegungswahrscheinlichkeit). Eine sicher ermittelte Belegung ist eine solche, deren festgestellte Wahrscheinlichkeit einen Schwellwert überschreitet, oder deren Wahrscheinlichkeit im Vergleich zu Wahrscheinlichkeiten anderer Belegungen hoch ist. Ein Hindernis und eine Belegung stellen eine Grenze des Freiraums für das Fahrzeug dar. Es ist auch möglich die einzelnen Bereiche nochmals aufzuteilen und nur für einen Unterbereich den Abstand, die Belegungswahrscheinlichkeit, den Typ usw. anzugeben. Wenn beispielsweise ein Bereich einen Winkelbereich von 4° abdeckt, kann ein Unterbereich in einer 1° Stufe gewählt werden. Um die Genauigkeit der Winkelangabe zu erhöhen kann also anschließend noch der Unterbereich (1-4) (2Bit) angeben werden. Eine solche genauere Angabe basierend auf Unterbereichen kann auf Anforderung eines Fahrerassistenzsystems geleistet werden. Weiterhin können zu ermittelten Belegungen auch Attribute ermittelt werden, wie bewegbar, nicht-bewegbar, Geschwindigkeit und ein Typ-Klassifikator (Fahrzeug, ein Fußgänger, ...), wenn das Fahrzeug ferner über eine Hinderniserkennung verfügt.

In einer Weiterbildung decken Bereiche in Fahrtrichtung vordem Fahrzeug jeweils einen Winkelbereich (beispielsweise 5° bis 10° oder 15° bis 18° in einem auf dem Fahrzeug zentrierten Polarkoordinatensystem) ausgehend vom Fahrzeug ab, insbesondere einen Winkelbereich eines Polarkoordinatensystems, das im Fahrzeug (in einem Punkt des Fahrzeugs) seinen Ursprung hat. Es findet somit eine Reduzierung der Belegungsinformation für Winkelbereiche vor dem Fahrzeug statt. Dies ist deshalb vorteilhaft, weil die Belegungsangabe für Winkelbereiche den Entscheidungsmöglichkeiten beim Fahren entspricht, nämlich der Wahl der Fahrtrichtung. Darüber hinaus ist bei einer Winkelangabe in einem Polarkoordinatensystem die Darstellung in der Nähe des Fahrzeugs genauer. Die Angabe der Belegungsinformation ist damit auf eine Weise reduziert, die die Endfunktion von fahrt(richtungs)steuernden Fahrerassistenzsystemen berücksichtigt. Für die Bereiche in Fahrtrichtung vor dem Fahrzeug wird der Abstand anhand der Entfernung der Belegung zum Fahrzeug bestimmt. Dieser Abstand stellt in einem Polarkoordinatensystem den Abstand in der Polarkoordinatensystem-Repräsentation dar.

In einer Weiterentwicklung ist der Winkelbereich, der jeweils von den Bereichen einer ersten Gruppe abgedeckt wird, kleiner, als der Winkelbereich, der jeweils von Bereichen einer zweiten Gruppe abgedeckt wird. Unterschiedliche Bereiche sind somit unterschiedlich groß. Dies kann dazu verwendet werden, die Datenmengen weiter zu reduzieren, indem in Bereichen, in denen keine besonders fein aufgelösten Belegungsinformationen benötigt werden, größere Bereiche definiert werden.

Insbesondere können die Bereiche der ersten Gruppe aneinandergrenzen und die Längsachse des Fahrzeugs in Fahrtrichtung vor dem Fahrzeug überlagern. Somit wird der Abschnitt des Fahrzeugs, der sich in Fahrtrichtung zentral vor dem Fahrzeug befindet, feiner abgebildet, als die seitlichen Bereiche vor dem Fahrzeug. Dies ermöglicht es, Ressourcen für die Abschnitte des Fahrzeugumfelds einzusetzen, die für fahrt(richtungs)steuernde Fahrerassistenzsysteme besonders wichtig sind. Eine Fahrerassistenzfunktion beispielsweise, die eine zukünftige Fahrttrajektorie beim hoch automatisierten Fahren auf der Autobahn plant, benötigt über Belegungen im zentralen vorderen Abschnitt des Umfeldes genauere Informationen, als über sich seitlich leicht vor dem Fahrzeug befindliche Belegungen.

In einer bevorzugten Implementierung decken Bereiche in Fahrtrichtung hinter dem Fahrzeug jeweils einen Bereich der Werte auf der Abszissensachse (x-Achse) eines kartesischen Koordinatensystems ab, wobei die Abszissenachse an der Längsrichtung des Fahrzeugs ausgerichtet ist. Die Wahl von Bereichen, die entsprechend eines kartesischen Koordinatensystems gewählt werden, also einem Rechteck ähneln können, ist insbesondere für den rückwärtigen Bereich eines Fahrzeugs sinnvoll. Bei Rückwärtsfahrten während Parkvorgängen oder der Beobachtung des rückwärtigen Verkehrs auf Straßen ist die Erkennung von Hindernissen in einem kartesischen Raster von Vorteil. Die Bereiche können jeweils 0,5 m, 2 m oder 10 m Bänder angeben, so dass der erste Bereich beispielsweise Belegungen mit Werten auf der Abszisse von 0 m bis 1 m abdeckt, der nächste Bereich Werte von 1 m bis 2 m, usw.

Der Abstand für eine Belegung kann durch deren Wertes auf der Ordinatenachse (y-Achse) des kartesischen Koordinatensystems bestimmt werden. Wenn die Position der Belegung durch ein Wertepaar (x/y) in dem kartesischen Koordinatensystem gegeben ist, kann einfach direkt der y-Wert als Abstand übernommen werden. Dies ist eine besonders recheneffektive Variante.

In einer Fortbildung liegen die jeweiligen Bereiche in Fahrtrichtung hinter dem Fahrzeug, jeweils entweder links oder rechts der Abszissenachse. In dieser Fortbildung werden also Bereiche mit positivem Abstand und mit negativem Abstand unterschieden. Die Aufteilung wird feiner.

In einer Variante decken Bereiche in Fahrtrichtung hinter dem Fahrzeug jeweils einen Bereich der Werte auf der Abszissensachse eines kurvilinearen kartesischen Koordinatensystems ab, nämlich einem Koordinatensystem bei dem die Abszissenachse durch den Pfad gebildet wird, der von dem Fahrzeug durchfahren wurde und allen Punkten auf der Ordinatenachse, nämlich einer Geraden senkrecht zur Abszissenachse, der gleiche Wert auf der Abszissenachse zugeordnet wird.

Anstatt eines kartesischen Koordinatensystems wird somit sozusagen eine gebogene Variante des kartesischen Koordinatensystems verwendet, wobei die Abszissenachse des kartesischen Koordinatensystems auf dem Pfad liegt, der vom Fahrzeug durchfahren wurde. Der x-Wert einer Belegung wird dann durch eine (punktweise) senkrechte Projektion der Belegung auf die x-Achse errechnet. Ein solches Koordinatensystem wird kurvilinear genannt. Im hinteren Bereich eignet sich die kurvilineare (auf die Ego Trajektorie bezogene) Darstellung am besten, da der vergangene Fahrweg bekannt ist und so die rechte und linke Fahrwegseite eindeutig auseinander gehalten werden können. Außerdem ist diese Aufbereitung für darauf aufbauende Funktionen wie Spurwechselassistent usw. besonders geeignet. Für kleine Wahrnehmungsbereiche hinter dem Fahrzeug kann eine lineare Darstellung statt der kurvilinearen Darstellung genutzt werden. Die genannten Vorteile gelten auch für die kartesische Darstellung bei geraden Fahrtstrecken und in abgeschwächter Form auch für Kurvenfahrten. Für die Bereiche kann der Abstand für eine Belegung durch deren Wertes auf der Ordinatenachse des Koordinatensystems bestimmt werden, also durch die punktweise) senkrechte Projektion der Belegung auf die x-Achse.

Das Verfahren kann um Folgendes erweitert werden: Verknüpfen der sichersten ermittelten Belegungen mehrerer Bereiche zu einer durchgängigen Belegung und/oder Verknüpfen von nächsten Belegungen mehrerer Bereiche zu einer weiteren durchgängigen Belegung. Auf diese Weise können in der Praxis häufig auftretende Begrenzungen wie Leitplanken oder Häuserwände beschrieben werden. Diese Informationen können Assistenzsystemen Zusatzinformationen zur längerfristigen Fahrtplanung liefern und gegebenenfalls Interpolationen ermöglichen.

In einem weiteren Aspekt nach Anspruch 12 ist ein Computerprogramm dazu eingerichtet einen Computer bei dessen Ausführung dazu zu veranlassen, ein Verfahren nach einem der vorhergehenden Ansprüche auszuführen.

In einem anderen Aspekt nach Anspruch 13 ist eine Rechenvorrichtung dazu eingerichtet, eines der obenstehenden Verfahren auszuführen. Die Rechenvorrichtung kann ein Computer mit einem gespeicherten Computerprogramm sein, oder ein anwendungsspezifischer Schaltkreis.

### KURZE BESCHREIBUNG DER ZEICHNUNGEN

Fig. 1 zeigt schematisch eine Aufteilung des Umfeldes in Bereiche gemäß einem Ausführungsbeispiel.
Fig. 2 zeigt schematisch eine weitere Aufteilung des Umfeldes in Bereiche gemäß einem weiteren Ausführungsbeispiel.
Fig. 3 zeigt schematisch eine Variante der Erkennung von Belegungen im Umfeld gemäß einem Ausführungsbeispiel.
Fig. 4 zeigt schematisch eine weitere Variante der Erkennung von Belegungen im Umfeld gemäß einem weiteren Ausführungsbeispiel.

Gleiche Bezugszeichen beziehen sich auf sich entsprechende Elemente über die Figuren hinweg.

### DETAILLIERTE BESCHREIBUNG DER AUSFÜHRUNGSBEISPIELE

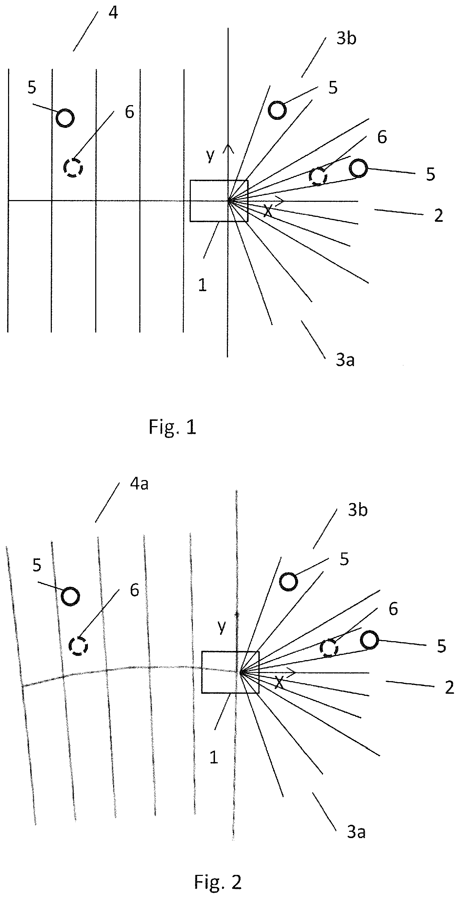

Fig. 1 zeigt schematisch eine Aufteilung des Umfeldes eines Fahrzeugs 1 in Bereiche gemäß einem Ausführungsbeispiel. Das Fahrzeug 1 verfügt über Sensoren zur Umfelderkennung und eine Rechenvorrichtung zum Erstellen einer Umfeldkarte, die Belegungen angibt. Für die Aufteilung des Umfeldes wird das Umfeld in vier Abschnitte 2, 3a, 3b und 4 unterteilt. In den Abschnitten 2, 3a und 3b, die sich im Wesentlichen in Fahrtrichtung vor dem Fahrzeug 1 befinden, werden Bereiche verwendet, die einen Winkelbereich vom Fahrzeug ausgehend abdecken, wozu ein Polarkoordinatensystem verwendet wird. Im Abschnitt 4, der sich im Wesentlichen hinter dem Fahrzeug 1 befindet, werden Bereiche basierend auf einem kartesischen Koordinatensystem verwendet, wobei jeder Bereich einen Bereich der Abszissenachse des kartesischen Koordinatensystems abdeckt (unabhängig vom Wert der Belegung auf der Ordinatenachse). In den Abschnitten 3a und 3b, die rechts und links vorne seitlich des Fahrzeugs sind, ist ein Winkelbereich jeweils 20° groß. Im Abschnitt 2 ist ein Winkelbereich je 10° groß. Im Abschnitt 2 ist die Aufteilung somit feiner.

Mithilfe der Sensormessungen des Fahrzeugs 1 werden die Belegungen des Umfeldes des Fahrzeugs 1 ermittelt. Ergebnis dieser Ermittlung ist eine Aussage über den Ort einer Belegung und die Wahrscheinlichkeit der Sicherheit der Ermittlung. Zur Angabe der Belegungen (zur Verwendung durch Assistenzsysteme beispielsweise) wird für jeden Bereich jedoch nur die nächste ermittelte Belegung bereitgestellt, unabhängig von der Wahrscheinlichkeit mit der dieses erkannt wurde, und diejenige ermittelte Belegung, die in dem jeweiligen Bereich mit der höchsten Wahrscheinlichkeit (am sichersten) ermittelt wurde. Dies verringert den Speicherbedarf der so entstehenden Datenmenge aufgrund einer Auswahl von anzugebenen Informationen, die sich an den Anforderungen der Fahrerassistenzsysteme orientiert. In Fig. 1 sind die nächsten Belegungen 6 durch gestrichelte Kreise dargestellt. Die am sichersten ermittelten Belegungen 5 sind durch Kreise mit durchgehender Linie gezeichnet. Wenn die am sichersten erkannte Belegung auch gleichzeitig die nächste ist, wird in dem jeweiligen Bereich nur diese eine Belegung angegeben.

Fig. 2 zeigt schematisch eine weitere Aufteilung des Umfeldes in Bereiche gemäß einem weiteren Ausführungsbeispiel. Dieses Beispiel baut auf dem der Fig. 1 auf, wobei in Abschnitt 4a die Angaben nicht ein einem kartesischen Koordinatensystem, sondern einem kurvilinearen Koordinatensystem gemacht werden. Die Trajektorie, die die gekrümmte Abszissenachse (x-Linie) bildet, entspricht dabei dem Pfad, auf dem das Fahrzeug gefahren ist. Auch der Abschnitt 4a wird in Bereiche unterteilt, wobei diese senkrecht zur Trajektorie verlaufen.

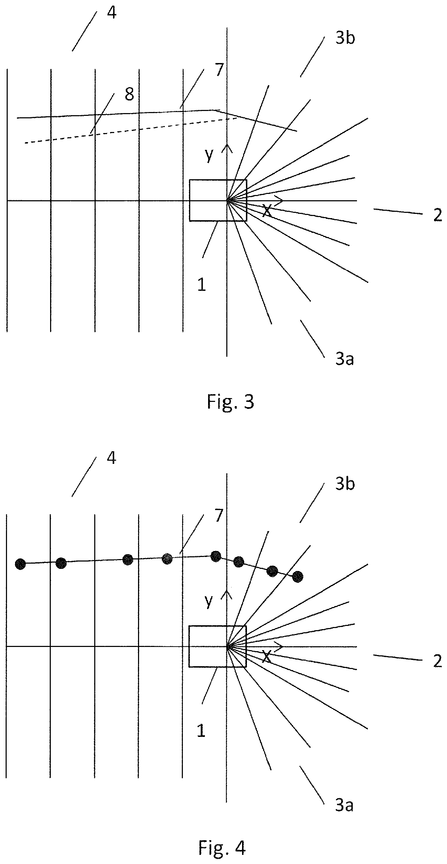

Fig. 3 zeigt schematisch eine Variante der Ermittlung von Belegungen im Umfeld gemäß einem Ausführungsbeispiel. Von der Rechenvorrichtung werden ermittelte Belegungen über die Bereiche hinweg zu Freiraumgrenzen verbunden. Auch bei diesen kontinuierlichen Freiraumgrenzen wird zwischen der nächsten erkannten Grenze 8 und der am sichersten erkannten Grenze 7 unterschieden. Es kann vorgesehen sein, nur diese beiden Grenzen bereitzustellen, um die Verarbeitung an die Leistungsfähigkeit der Rechensysteme anzupassen.

Fig. 4 zeigt schematisch eine weitere Variante der Erkennung/Ermittlung von Belegungen im Umfeld gemäß einem weiteren Ausführungsbeispiel. In dieser weiteren Variante werden einzelne erkannte benachbarte Belegungen zu einer Polylinie verknüpft. Eine solche Linie kann beispielsweise Fahrbahnbegrenzungen oder Häuserwände gut beschreiben.

## Patentansprüche

1. Verfahren zum Betreiben eines Fahrerassistenzsystems eines Fahrzeugs zur Warnung und/oder Vermeidung von Kollisionen unter Verwendung von dem effizienten Bereitstellen von Belegungsinformationen für das Umfeld eines Fahrzeugs (1), wobei das Fahrzeug (1) Sensoren zur Ermittlung der Belegung des Umfeldes umfasst, wobei das Verfahren umfasst:
Empfangen von Sensormessungen des Umfeldes des Fahrzeugs (1);
Ermitteln der Belegungen (5, 6) des Umfeldes durch Hindernisse anhand der Sensormessungen, wobei eine Belegung den Ort der Belegung und die Wahrscheinlichkeit der Sicherheit der Ermittlung umfasst;
Bereitstellen einer Aufteilung des Umfeldes in Bereiche;
Für jeden Bereich des Umfeldes:
Falls mehr als zwei Belegungen (5, 6) des Umfeldes in dem jeweiligen Bereich erkannt wurden:
Bestimmen der am sichersten ermittelten Belegung (5) in dem jeweiligen Bereich; und
Bestimmen der nächsten Belegung (6), nämlich derjenigen Belegung in dem jeweiligen Bereich, für die der kleinste Abstand gemäß einer für den jeweiligen Bereich festgelegten Abstandsbestimmung ermittelt wurde;
Bereitstellen der am sichersten ermittelten Belegung (5) und
der nächsten Belegung (6).

2. Verfahren nach Anspruch 1, wobei Bereiche in Fahrtrichtung vor dem Fahrzeug (1) jeweils einen Winkelbereich ausgehend vom Fahrzeug (1) abdecken, insbesondere einen Winkelbereich eines Polarkoordinatensystems, das im Fahrzeug (1) seinen Ursprung hat.

3. Verfahren nach Anspruch 2, wobei für die in Anspruch 1 genannten Bereiche der Abstand anhand der Entfernung der Belegung (5, 6) zum Fahrzeug (1) bestimmt wird.

4. Verfahren nach einem der Ansprüche 2 oder 3, wobei der Winkelbereich, der jeweils von den Bereichen einer ersten Gruppe abgedeckt wird, kleiner ist, als der Winkelbereich, der jeweils von Bereichen einer zweiten Gruppe abgedeckt wird.

5. Verfahren nach Anspruch 4, wobei die Bereiche der ersten Gruppe aneinandergrenzen und die Längsachse des Fahrzeugs in Fahrtrichtung vor dem Fahrzeug (1) überlagern.

6. Verfahren nach einem der vorhergehenden Ansprüche, wobei Bereiche in Fahrtrichtung hinter dem Fahrzeug (1) jeweils einen Bereich der Werte auf der Abszissensachse eines kartesischen Koordinatensystems abdecken, wobei die Abszissenachse an der Längsrichtung des Fahrzeugs ausgerichtet ist.

7. Verfahren nach Anspruch 6, wobei für die in Anspruch 6 genannten Bereiche der Abstand für eine Belegung durch deren Wertes auf der Ordinatenachse des Koordinatensystems bestimmt wird.

8. Verfahren nach einem der Ansprüche 6 oder 7, wobei die jeweiligen Bereiche in Fahrtrichtung hinter dem Fahrzeug (1), jeweils entweder links oder rechts der Abszissenachse liegen.

9. Verfahren nach einem der Ansprüche 1 bis 5, wobei Bereiche in Fahrtrichtung hinter dem Fahrzeug (1) jeweils einen Bereich der Werte auf der Abszissensachse eines kurvilinearen kartesischen Koordinatensystems abdecken, nämlich ein Koordinatensystem bei dem die Abszissenachse durch den Pfad gebildet wird, der von dem Fahrzeug (1) durchfahren wurde und allen Punkten auf der Ordinatenachse, nämlich einer Geraden senkrecht zur Abszissenachse, der gleiche Wert auf der Abszissenachse zugeordnet wird.

10. Verfahren nach Anspruch 9, wobei für die in Anspruch 9 genannten Bereiche der Abstand für eine Belegung durch deren Wertes auf der Ordinatenachse des Koordinatensystems bestimmt wird

11. Verfahren nach einem der vorhergehenden Ansprüche, ferner umfassend:
Verknüpfen der sichersten ermittelten Belegungen (5) mehrerer Bereiche zu einer durchgängigen Belegung und/oder Verknüpfen von nächsten Belegungen (6) mehrerer Bereiche zu einer weiteren durchgängigen Belegung.

12. Computerprogramm, das dazu eingerichtet ist, einen Computer bei dessen Ausführung dazu zu veranlassen, ein Verfahren nach einem der vorhergehenden Ansprüche auszuführen.

13. Rechenvorrichtung, wobei die Rechenvorrichtung dazu eingerichtet ist, ein Verfahren nach einem der Ansprüche 1 bis 11 auszuführen.

## Claims

1. Method for operating a driver assistance system of a vehicle for warning and/or preventing collisions using the efficient provision of occupancy information for the surroundings of a vehicle (1), wherein the vehicle (1) comprises sensors for ascertaining the occupancy of the surroundings, the method comprising:
reception of sensor measurements of the surroundings of the vehicle (1);
ascertainment of the occupancies (5, 6) of the surroundings by obstacles on the basis of the sensor measurements, wherein an occupancy comprises the location of the occupancy and the probability of the certainty of the ascertainment;
provision of a split for the surroundings into regions;
for each region of the surroundings:
if more than two occupancies (5, 6) of the surroundings have been identified in the respective region:
determination of the most certainly ascertained occupancy (5) in the respective region; and
determination of the closest occupancy (6), namely that occupancy in the respective region for which the shortest distance has been ascertained as per a distance determination stipulated for the respective region;
provision of the most certainly ascertained occupancy (5) and the closest occupancy (6).

2. Method according to Claim 1, wherein regions in the direction of travel in front of the vehicle (1) each cover an angular range from the vehicle (1), particularly an angular range in a polar coordinate system that has its origin in the vehicle (1).

3. Method according to Claim 2, wherein the distance for the regions cited in Claim 1 is determined on the basis of the range of the occupancy (5, 6) from the vehicle (1).

4. Method according to either of Claims 2 and 3, wherein the angular range that is covered by each of the regions in a first group is smaller than the angular range that is covered by each of the regions in a second group.

5. Method according to Claim 4, wherein the regions in the first group adjoin one another and overlie the longitudinal axis of the vehicle in the direction of travel in front of the vehicle (1).

6. Method according to one of the preceding claims, wherein regions in the direction of travel behind the vehicle (1) each cover a range of the values on the axis of abscissae in a Cartesian coordinate system, the axis of abscissae being oriented in the longitudinal direction of the vehicle.

7. Method according to Claim 6, wherein the distance for an occupancy for the regions cited in Claim 6 is determined by the value of said occupancy on the axis of ordinates in the coordinate system.

8. Method according to either of Claims 6 and 7, wherein the respective regions in the direction of travel behind the vehicle (1) are each situated either to the left or right of the axis of abscissae.

9. Method according to one of Claims 1 to 5, wherein regions in the direction of travel behind the vehicle (1) each cover a range of the values on the axis of abscissae in a curvilinear Cartesian coordinate system, namely a coordinate system in which the axis of abscissae is formed by the path that the vehicle (1) has taken, and all points on the axis of ordinates, namely a straight line perpendicular to the axis of abscissae, are assigned the same value on the axis of abscissae.

10. Method according to Claim 9, wherein the distance for an occupancy for the regions cited in Claim 9 is determined by the value of said occupancy on the axis of ordinates in the coordinate system.

11. Method according to one of the preceding claims, additionally comprising:
combination of the most certainly ascertained occupancies (5) of multiple regions to form one continuous occupancy and/or combination of closest occupancies (6) of multiple regions to form a further continuous occupancy.

12. Computer program that is set up to prompt a computer, when executed, to carry out a method according to one of the preceding claims.

13. Computation apparatus, wherein the computation apparatus is set up to carry out a method according to one of Claims 1 to 11.

## Revendications

1. Procédé d'exploitation d'un système d'assistance au conducteur d'un véhicule pour alerter sur et/ou éviter des collisions en utilisant la fourniture efficace d'informations d'occupation pour l'entourage d'un véhicule (1), le véhicule (1) comprenant des capteurs pour établir l'occupation de l'entourage, le procédé comprenant les étapes consistant à :
recevoir des mesures de capteur de l'entourage du véhicule (1) ;
établir les occupations (5, 6) de l'entourage par des obstacles à l'aide des mesures de capteur, une occupation comprenant le lieu de l'occupation et la probabilité de la certitude de l'établissement ;
fournir une division de l'entourage en zones ;
pour chaque zone de l'entourage :
si plus de deux occupations (5, 6) de l'entourage ont été identifiées dans la zone respective :
déterminer l'occupation (5) établie de la manière la plus sûre dans la zone respective ; et
déterminer l'occupation la plus proche (6), notamment l'occupation dans la zone respective pour laquelle le plus petit écart a été établi selon une détermination d'écart fixée pour la zone respective ;
fournir l'occupation (5) établie de la manière la plus sûre et l'occupation la plus proche (6).

2. Procédé selon la revendication 1, dans lequel des zones dans le sens de la marche du véhicule (1) couvrent respectivement une plage angulaire partant du véhicule (1), en particulier une plage angulaire d'un système de coordonnées polaires dont l'origine se trouve dans le véhicule (1).

3. Procédé selon la revendication 2, dans lequel, pour les zones mentionnées à la revendication 1, l'écart est déterminé à l'aide de la distance entre l'occupation (5, 6) et le véhicule (1).

4. Procédé selon l'une quelconque des revendications 2 ou 3, dans lequel la plage angulaire qui est couverte respectivement par les zones d'un premier groupe est plus petite que la plage angulaire qui est couverte respectivement par les zones d'un deuxième groupe.

5. Procédé selon la revendication 4, dans lequel les zones du premier groupe sont adjacentes et recouvrent l'axe longitudinal du véhicule dans le sens de la marche devant le véhicule (1).

6. Procédé selon l'une quelconque des revendications précédentes, dans lequel des zones dans le sens de la marche derrière le véhicule (1) couvrent respectivement une plage des valeurs sur l'axe des abscisses d'un système de coordonnées cartésiennes, l'axe des abscisses étant aligné sur la direction longitudinale du véhicule.

7. Procédé selon la revendication 6, dans lequel, pour les zones mentionnées à la revendication 6, l'écart pour une occupation est déterminé par les valeurs de celle-ci sur l'axe des ordonnées du système de coordonnées.

8. Procédé selon l'une quelconque des revendications 6 ou 7, dans lequel les zones respectives se trouvent dans le sens de la marche derrière le véhicule (1), respectivement soit à gauche, soit à droite, de l'axe des abscisses.

9. Procédé selon l'une quelconque des revendications 1 à 5, dans lequel des zones dans le sens de la marche derrière le véhicule (1) couvrent respectivement une plage des valeurs sur l'axe des abscisses d'un système de coordonnées cartésiennes curvilignes, notamment un système de coordonnées dans lequel l'axe des abscisses est formé par le chemin parcouru par le véhicule (1), et la même valeur sur l'axe des abscisses est associée à tous les points sur l'axe des ordonnées, notamment une droite perpendiculaire à l'axe des abscisses.

10. Procédé selon la revendication 9, dans lequel, pour les zones mentionnées à la revendication 9, l'écart pour une occupation est déterminé par les valeurs de celle-ci sur l'axe des ordonnées du système de coordonnées.

11. Procédé selon l'une quelconque des revendications précédentes, comprenant en outre :
l'association des occupations (5) établies de la manière la plus sûre de plusieurs zones en une occupation continue et/ou l'association des occupations les plus proches (6) de plusieurs zones en une autre occupation continue.

12. Programme informatique qui est conçu, lors de son exécution, pour amener un ordinateur à exécuter un procédé selon l'une quelconque des revendications précédentes.

13. Dispositif de calcul, dans lequel le dispositif de calcul est conçu pour exécuter un procédé selon l'une quelconque des revendications 1 à 11.
